(19) Europäisches Patentamt

European Patent Office

Office européen des brevets

(11) **EP 2 233 948 B1**

(12) **FASCICULE DE BREVET EUROPEEN**

(45) Date de publication et mention de la délivrance du brevet:
**09.05.2012 Bulletin 2012/19**

(21) Numéro de dépôt: **10157712.0**

(22) Date de dépôt: **25.03.2010**

(51) Int Cl.:
*G01S 19/00* (2010.01)     *G01S 19/33* (2010.01)
*G01S 19/23* (2010.01)     *G01S 19/21* (2010.01)
*G01S 19/32* (2010.01)

(54) **Procédés de calcul de la position d'un recepteur GNSS à partir de pseudo-mesures bi et mono fréquences.**

Lageberechnungsverfahren eines GNSS-Empfängers auf Grundlage von Einzel- und Zweifrequenz Pseudomessungen

Methods for calculating the position of a GNSS receiver according to dual- and mono-frequency pseudo-measurements

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **27.03.2009 FR 0901510**

(43) Date de publication de la demande:
**29.09.2010 Bulletin 2010/39**

(73) Titulaire: **Thales**
**92200 Neuilly Sur Seine (FR)**

(72) Inventeurs:
• **Rollet, Stéphane**
 **26120 Chabeuil (FR)**
• **Perre, Jean-Michel**
 **07130 St Peray (FR)**
• **Martin, Nicolas**
 **26500 Bourg Les Valence (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**US-A1- 2004 135 721     US-A1- 2005 203 702**

• **YUNCHUN YANG ET AL: "L1 Backup Navigation for Dual Frequency GPS Receiver" ION GPS/ GNSS, XX, XX, 9 septembre 2003 (2003-09-09), pages 1258-1263, XP002330466**
• **UZEAU C; MACABIAU C; ROTURIER B; MABILLEAU M; AZOULAI L; LEVAN J; BESSE F: "Ionospheric delay estimation in a single frequency mode for civil aviation" 21ST INTERNATIONAL TECHNICAL MEETING OF THE SATELLITE DIVISION OF THE INSTITUTE OF NAVIGATION, ION GNSS 2008, vol. 1, 19 septembre 2008 (2008-09-19), - 19 septembre 2008 (2008-09-19) pages 499-509, XP002550239 USA ISBN: 9781605606897**

EP 2 233 948 B1

## Description

La présente invention concerne le domaine des systèmes de radionavigation par satellite et plus particulièrement la détermination de la position d'un récepteur utilisant des pseudo-distances mesurées à partir des signaux envoyés par des satellites. Le domaine de l'invention traite des cas où un récepteur mobile calcul sa position à partir des signaux reçus d'un ensemble de satellites dont un sous ensemble comporte des satellites qui envoient des signaux en mono-fréquences et un second sous ensemble comporte des satellites qui envoient des signaux en bi-fréquences.

Actuellement, la localisation d'un récepteur mobile par satellite est réalisée par la mesure de pseudo-distances. Généralement, ces mesures sont biaisées par l'erreur d'horloge du récepteur. Cette erreur peut être éliminée à condition d'ajouter une mesure supplémentaire, c'est à dire d'avoir au moins quatre mesures satellites.

Les mesures de pseudo-distance sont entachées d'erreurs liées au récepteur, dues notamment au bruit thermique et à la propagation dans l'atmosphère qui induit des retards différents suivant les satellites.

Une des sources d'erreur prépondérante est le retard dû à l'ionosphère. Néanmoins, il existe des modèles, tel que les modèles connus sous les noms "Klobuchar" ou "Nequick", fournissant des corrections en fonction de la position du récepteur et des satellites, mais ils permettent de corriger au mieux 50% des erreurs.

Dans les solutions de l'art antérieur, la localisation d'un récepteur GNSS par satellites, dont l'acronyme anglo-saxon signifie "global navigation satellite system", emploie des signaux satellites généralement mono-fréquences. Les mesures de la position d'un récepteur GNSS sont alors limitées en précision.

Une technique performante pour corriger l'erreur ionosphérique consiste à émettre deux signaux par satellite sur des fréquences de porteuses différentes. Le retard ionosphérique étant inversement proportionnel au carré de la fréquence, le différentiel de temps de propagation observé entre les deux fréquences permet de remonter à l'erreur ionosphérique et de la soustraire aux mesures.

Le système actuel GPS utilise des signaux L1 et L2 qui peuvent bénéficier de cette technique de correction d'erreur. En revanche, l'accès aux signaux L2 se fait soit via des codes cryptés soit par une technique appelée "semi-codeless", moins performante. En outre, la bande L2 n'est pas certifiée pour les applications aéronautiques, cette méthode n'est donc pas utilisée actuellement en aviation civile, par exemple.

Le déploiement des systèmes GNSS, tels que les systèmes Galileo et GPS modernisé, généralisera les signaux bi-fréquences dans les bandes ARNSS, dont l'acronyme signifie dans la terminologie anglo-saxonne "Aeronautical radio navigation satellite service". En outre, il permettra à tous les récepteurs d'offrir la possibilité de corriger les erreurs ionosphériques pour améliorer le positionnement d'un récepteur GNSS.

Les récepteurs bi-fréquences existants utilisent deux voies analogiques, notées a et b, distinctes pour traiter les deux fréquences Fa et Fb. Par exemple, les récepteurs GPS pour l'aviation civile utilisent la fréquence L1, sensiblement égale à 1575.42 MHz, et la fréquence L5, sensiblement égal à 1176.45 MHz. Les récepteurs Galileo utilisent la fréquence L1 et la fréquence E5b, sensiblement égale à 1207.14 MHz.

Quelque soit les fréquences utilisées, lorsque les récepteurs bi-fréquences reçoivent deux signaux, les temps de propagation Ba et Bb dans chacune des voies analogiques du récepteur peuvent être différents. Ce qui a pour effet d'introduire un biais dans l'estimation de l'erreur ionosphérique sur chaque satellite, basée sur le différentiel de temps de propagation entre les deux fréquences.

Tant que toutes les mesures utilisées pour résoudre la position sont bi-fréquences, et que donc ce biais se retrouve identique sur tous les satellites, l'effet sur la position est nul. En effet, dans ce cas l'algorithme de résolution, noté PVT dont l'acronyme anglo-saxon signifie "Position, velocity and time", introduit ce biais sur le compte de l'erreur d'horloge du récepteur.

Cependant, certains cas de figures, concernant la détermination de la position d'un récepteur GNSS, nécessitent de devoir utiliser des mesures mono-fréquence et bi-fréquences mélangées pour résoudre la position du récepteur.

Ces cas se produisent notamment lors de la phase transitoire de remplacement des satellites d'une constellation, les satellites anciens mono-fréquence étant remplacés au fur et à mesure par des satellites bi-fréquences.

Ces cas apparaissent également en cas d'interférence sur une des deux bandes, notamment lorsque le niveau d'interférence a pour conséquence de faire décrocher quelques satellites parmi les plus faibles. La scintillation ionosphérique peut faire décrocher momentanément une des deux fréquences sur certains satellites.

Le choix d'utiliser des mesures mono-fréquence, moins précises du fait de la correction ionosphérique basée sur un modèle, en même temps que les mesures bi-fréquences est justifié par le gain obtenu en terme de géométrie des satellites, également appelé GDOP dont l'acronyme anglo-saxon signifie "Geometric Dilution Of Precision".

Les mesures mono-fréquence doivent néanmoins être pondérées avec une variance représentative de l'erreur réelle incluant l'erreur ionosphérique résiduelle après application du modèle ionosphérique.

Un tel procédé est divulgué dans Y. Yang et al "L1 Backup Navigation for Dual Frequency GPS Receiver"

ION GPS/GNSS 2003, 9-12 Septembre 2003, Portland, USA.

Cependant lorsque des mesures satellites mono-fréquences et bi-fréquences permettent de déterminer la position d'un récepteur GNSS, le biais inter-fréquence dans les canaux HF d'un récepteur bi-fréquences peut induire une erreur importante sur la position résolue.

Un but de l'invention est de palier aux inconvénients précités.

En outre un but de l'invention est de réduire l'erreur de mesure de position du récepteur GNSS. L'invention permet d'estimer le différentiel inter-fréquence dans les canaux HF d'un récepteur bi-fréquences grâce aux mesures fournies par les signaux des satellites. L'invention permet d'estimer la valeur du biais inter-fréquence HF et de compenser les erreurs de position du récepteur.

En outre, l'invention permet de le compenser ce différentiel sur les mesures bi-fréquences sans considérer l'erreur ionosphérique avant ou après le calcul de la position du point.

Dans la description, on appelle mesure "iono-free" une mesure bi-fréquences de la position sans erreur ionosphérique. Cette désignation s'applique notamment aux pseudo-distances dans lesquelles l'erreur ionosphérique est éliminée par une combinaison linéaire des mesures d'un même satellite sur les deux fréquences.

L'invention permet de réaliser une estimation du biais inter-fréquence en temps réel avant chaque résolution d'une position ou pendant une phase de calibration.

Chaque fois qu'un nombre important de mesures bi-fréquences est disponible, une calibration peut être engagée. L'erreur de calibration est minimisée grâce à une moyenne des mesures entre les satellites et dans le temps.

Avantageusement, le procédé de détermination de la position d'un récepteur mobile à partir d'au moins quatre satellites dont au moins un premier satellite, dit satellite mono-fréquence, émet un premier signal sur une première fréquence $F_a$, et dont au moins un autre satellite, dit bi-fréquence, émet un second et un troisième signaux respectivement sur la première fréquence et sur une seconde fréquence $F_b$, est mis en oeuvre à partir d'un récepteur comportant des moyens de réception d'au moins deux fréquences $F_a$, $F_b$. La détermination de la position du récepteur comprend le calcul d'au moins quatre pseudo-distances correspondant aux distances entre chaque satellite et le récepteur.

Le calcul de la position du récepteur comporte une étape d'estimation du biais inter-fréquence, noté $\Delta B_{HF}$, des signaux bi-fréquences reçus dans les canaux HF du récepteur, le biais estimé étant noté $\Delta B_{estimé}$, le calcul du biais inter-fréquence permettant de compenser les mesures des pseudo-distances mono-fréquences ou bi-fréquences.

Avantageusement, le biais inter-fréquence estimé moyen entre les signaux bi-fréquences reçus par le récepteur

est égale à :

$$\Delta B_{estimé} \stackrel{def}{=} \frac{1}{(N-1)} \sum_{i=2}^{N} \left( pd_{ib\ mes} - pd_{ia\ mes} \right) \qquad \text{où } i \in [2, N]$$

sont des satellites bi-fréquences et $pd_{ia\text{-}mes}$ la pseudo-distance entre le satellite i et le récepteur mesurée sur la première fréquence $F_a$ et $pd_{ib\text{-}mes}$ la pseudo-distance entre le satellite i et le récepteur mesurée sur la seconde fréquence $F_b$.

Avantageusement, le biais inter-fréquence estimé moyen entre les signaux bi-fréquences reçus par le récepteur est égale à :

$$\Delta B_{estimé} = \Delta B_{HF} - \frac{1}{\beta} B_{iono\ moy} + v_{moy},$$

avec :

$$B_{iono\ moy} = \frac{1}{(N-1)} \sum_{i=2}^{N} B_{iono\ ia} \ ;$$

$$v_{moy} = \frac{1}{(N-1)} \sum_{i=2}^{N} (v_{ib} - v_{ia}) \ ;$$

où :

■ [2, N] sont des satellites émettant des signaux bi-fréquences ;
■ $\Delta B_{HF}$ est le biais inter-fréquence analogique dans les moyens de réception du récepteur, c'est-à-dire entre les voies a et b du récepteur ;
■ $v_{ix}$ est l'erreur de mesure hors retard liée à la traversée de l'ionosphérique sur la fréquence x pour le satellite i ;

■ $B_{iono-ia}$ est le retard de groupe due à la traversée de l'ionosphérique entre le satellite i et le récepteur sur la fréquence Fa, le retard de groupe étant égal à $CET_1 / F_a^2$, où CET est le contenu électrique total ;

■ β est une première constante égal au rapport entre la seconde fréquence au carré divisé par la différence des carrés de la première et la seconde fréquence, avec $\beta = F_b^2 / (F_b^2 - F_a^2)$.

Avantageusement, le biais inter-fréquence estimé moyen entre les signaux bi-fréquences reçus par le récepteur est égale à :

$$\Delta B_{estimé\ filtrée}(n) \overset{def}{=} (1 - \frac{1}{\tau})\Delta B_{estimé\ filtrée}(n-1) + \frac{1}{\tau}\Delta B_{estimé}(n)\ ,$$

Où τ est une constante de temps et où n est un indice d'échantillonnage avec une période inférieure à la corrélation du retard ionosphérique.

Avantageusement, le calcul de la position du récepteur comporte une étape de compensation d'un premier ensemble de pseudo-distances du biais inter-fréquence dans les canaux HF du récepteur entre la première et la seconde fréquences, l'étape de compensation comprenant le calcul d'un facteur correctif égal au produit du biais inter-fréquence estimé $\Delta B_{estimé}$ et de la première constante β.

Avantageusement, l'étape de compensation du premier ensemble de pseudo-distances du biais inter-fréquence dans les canaux HF du récepteur entre la première et la seconde fréquences, comprend le calcul d'une pseudo-distance ($pd_{i-mes}$), dite pseudo-distance iono-free, dans laquelle le biais dû à la traversée de l'ionosphère de signaux bi-fréquences est corrigé.

Avantageusement, l'étape de compensation du premier ensemble de pseudo-distances comprend le calcul de pseudo-distances iono-free égales, pour chaque satellite bi-fréquence à :

$$pd_{i-mes} = (F_a^2 . pd_{ia-mes} - F_b^2 . pd_{i-mes}) / (F_a^2 - F_b^2).$$

Avantageusement, une pseudo-distance iono-free est égale, pour chaque satellite bi-fréquence à :

$$pd_{i\ mes} = pd_i + \Delta t + v_i\ ;$$

où :

■ $pd_i$ est la pseudo-distance réelle entre le satellite i et le récepteur ;

■ $\Delta t$ est une inconnue comprenant le biais d'horloge récepteur ;

■ $v_i$ est une erreur de mesure des pseudo-distances iono-free pour le satellite i.

Avantageusement, l'étape de compensation du biais inter-fréquence comprend la définition, pour chaque satellite bi-fréquence, d'une pseudo-distance corrigée qui est égal à la valeur de la pseudo-distance iono-free retranchée du facteur correctif.

Avantageusement, à partir d'au moins quatre satellites dont au moins un second satellite mono-fréquence émet un signal sur la seconde fréquence, l'étape de compensation du biais inter-fréquence comprend :

■ Une première définition, pour chaque satellite bi-fréquence, d'une pseudo-distance corrigée qui est égal à la valeur de la pseudo-distance iono-free retranchée du facteur correctif et ;

■ Une seconde définition, pour le second satellite mono-fréquence, d'une pseudo-distance corrigée qui est égal à la valeur de la pseudo-distance mesurée retranchée de la valeur du biais estimé inter-fréquence.

Avantageusement, à partir d'au moins quatre satellites dont au moins un second satellite mono-fréquence émet un signal sur la seconde fréquence, l'étape de compensation du biais inter-fréquence comprend :

■ une troisième définition, pour le premier satellite mono-fréquence, d'une pseudo-distance corrigée qui est égale à la valeur de la pseudo-distance mesurée sur la fréquence $F_a$ à laquelle est ajoutée le facteur correctif et ;

■ une quatrième définition, pour le second satellite mono-fréquence, d'une pseudo-distance corrigée qui est égale à la valeur de la pseudo-distance mesurée sur la fréquence $F_b$ :

■ à laquelle est ajoutée le facteur correctif et ;
■ à laquelle est retranchée la valeur du biais inter-fréquence estimé.

D'autres caractéristiques et avantages de l'invention apparaîtront à l'aide de la description qui suit, faite en regard des dessins annexés qui représentent :

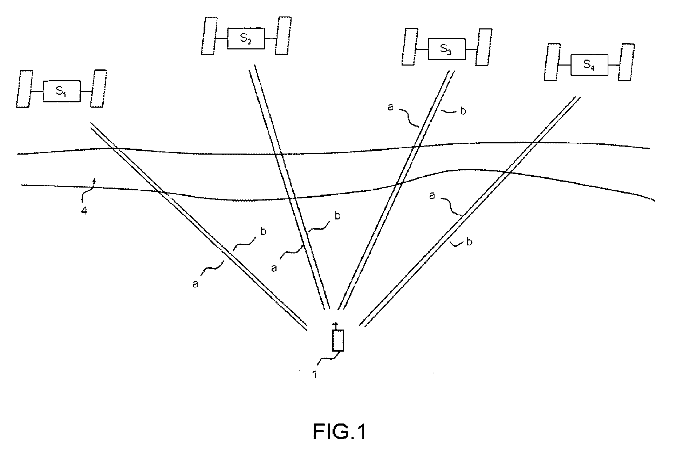

■ la figure 1 : une configuration d'un récepteur GNSS recevant des signaux d'une pluralité de satellites bi-fréquences ;
• la figure 2 : une configuration d'un récepteur GNSS recevant des signaux d'une pluralité de satellites bi-fréquences et d'au moins un satellite mono fréquence ;
• la figure 3 : l'ordre des corrections appliquées par un récepteur GNSS de l'invention sur les mesures des signaux reçus ;
• la figure 4 : l'ordre des corrections appliquées par un récepteur GNSS de l'invention sur les mesures des signaux reçus par deux constellations différentes.

Tout d'abord considérons dans la présente description le calcul de pseudo-distances lorsque les mesures proviennent de mesures bi-fréquence, c'est-à-dire que tous les satellites envoient deux signaux sur deux fréquences différentes.

Cette première considération permet d'estimer l'augmentation de la variance de bruits de mesures indépendante des erreurs liées à l'ionosphère dans une configuration où tous les satellites sont bi-fréquences.

La figure 1 représente le cas de figure où un récepteur 1 GNSS reçoit des signaux 2, 3 de quatre satellite S1, S2, S3, S4.

Les signaux 2, 3 reçus traversent chacun la ionosphère 4.

Une pseudo-distance mesurée entre un satellite $S_i$ et un récepteur GNSS $R_{GNSS}$ se décompose en une valeur réelle de la distance et un ensemble de paramètres d'ajustements prenant en compte le biais d'horloge récepteur, le biais introduit par les canaux HF sur la fréquence porteuse, le biais lié à l'ionosphère et le biais correspondant aux erreurs de mesure hors retard ionosphérique.

La pseudo-distance mesurée sur la fréquence "a" entre le satellite i et le récepteur GNSS est notée $pdi_{a\ mes}$. La distance réelle entre le satellite i et le récepteur GNSS est notée $pd_i$.

On a les relations suivantes pour {1; N} satellites utilisés dans les modèles d'estimation de la mesure d'une pseudo-distance pour le cas d'un récepteur GNSS :

$$pd_{1a\ mes} = pd_1 + \Delta t_h + B_a + B_{iono\ 1a} + v_{1a} \qquad B_{iono\ 1a} = CET_1 / F_a^2$$
$$pd_{1b\ mes} = pd_1 + \Delta t_h + B_b + B_{iono\ 1b} + v_{1b} \qquad B_{iono\ 1b} = CET_1 / F_b^2$$
$$pd_{2a\ mes} = pd_2 + \Delta t_h + B_a + B_{iono\ 2a} + v_{2a} \qquad B_{iono\ 2a} = CET_2 / F_a^2$$
$$pd_{2b\ mes} = pd_2 + \Delta t_h + B_b + B_{iono\ 2b} + v_{2b} \qquad B_{iono\ 2b} = CET_2 / F_b^2$$
$$\dots$$
$$pd_{Na\ mes} = pd_N + \Delta t_h + B_a + B_{iono\ Na} + v_{Na} \qquad B_{iono\ Na} = CET_N / F_a^2$$
$$pd_{Nb\ mes} = pd_N + \Delta t_h + B_b + B_{iono\ Nb} + v_{Nb} \qquad B_{iono\ Nb} = CET_N / F_b^2$$

Avec :

■ $pd_{ix\ mes}$ : Pseudo-distance mesurée sur la fréquence x, avec x = a ou b, pour le satellite i.
■ $pd_i$ Distance réelle entre le satellite i et le récepteur

■ $pd_i = \sqrt{(x - x_i)^2 + (y - y_i)^2 + (z - z_i)^2}$

■ (x,y,z): Position du récepteur
■ $(x_i, y_i, z_i)$: Position du satellite n°1
■ $\Delta t_h$: Biais d'horloge récepteur, exprimé en mètres, la valeur calculée relative à une distance est : $c.\Delta t_h$

■ $\dfrac{CET_i}{Fx^2}$ : Retard de groupe dû à la ionosphère, exprimé en mètre pour le satellite n°i

■ $CETi$ : Contenu électronique total pour le satellite n°i
■ $F_x^2$ : Fréquence de la porteuse x, avec x = a ou b

■ $B_x$ : Biais introduit par le canal HF sur la fréquence x, avec x = a ou b, exprimé en mètres
■ $\Delta B_{HF}$: Biais inter-fréquence analogique entre les voies a et b, exprimé en mètres. Il s'agit du biais introduit par le canal HF du récepteur entre les deux voies a et b.
■ $\Delta B = B_b - B_a$
■ $v_{ix}$: Erreur de mesure hors retard iono sur la fréquence x pour le satellite n°i

Les pseudos mesures peuvent dont s'écrire également :

$$pd_{1a\,mes} = pd_1 + \Delta t_h + B_a \qquad\qquad + B_{iono\,1a} + v_{1a} \qquad\qquad B_{iono\,1a} = CET_1 / F_a^{2}$$
$$pd_{1b\,mes} = pd_1 + \Delta t_h + B_a + \Delta B_{HF} + B_{iono\,1b} + v_{1b} \qquad\qquad B_{iono\,1b} = CET_1 / F_b^{2}$$
$$pd_{2a\,mes} = pd_2 + \Delta t_h + B_a \qquad\qquad + B_{iono\,2a} + v_{2a} \qquad\qquad B_{iono\,2a} = CET_2 / F_a^{2}$$
$$pd_{2b\,mes} = pd_2 + \Delta t_h + B_a + \Delta B_{HF} + B_{iono\,2b} + v_{2b} \qquad\qquad B_{iono\,2b} = CET_2 / F_b^{2}$$
$$\cdots$$
$$pd_{Na\,mes} = pd_N + \Delta t_h + B_a \qquad\qquad + B_{iono\,Na} + v_{Na} \qquad\qquad B_{iono\,Na} = CET_N / F_a^{2}$$
$$pd_{Nb\,mes} = pd_N + \Delta t_h + B_a + \Delta B_{HF} + B_{iono\,Nb} + v_{Nb} \qquad\qquad B_{iono\,Nb} = CET_N / F_b^{2}$$

Une source d'erreur prépondérante est la composante du biais inter-fréquence résultant de la traversée de la ionosphère.

Afin de déterminer la variance du bruit de mesure indépendante des erreurs ionosphériques, l'invention permet d'estimer une grandeur relative à une pseudo-distance en éliminant les termes $B_{iono\,1a}$ et $B_{iono\,1b}$.

A partir des mesures bi-fréquences, il est possible d'éliminer l'erreur liée au retard ionosphérique. Il s'agit d'éliminer les termes $B_{iono\,ia}$ et $B_{iono\,ib}$ sur le satellite i.

On obtient les expressions suivantes d'une nouvelle grandeur liée à une pseudo-distance, notée $pd_{imes}$ pour le satellite i :

$$pd_{1\,mes} = ( F_a^{2} \cdot pd_{1a\,mes} - F_b^{2} \cdot pd_{1b\,mes} ) / ( F_a^{2} - F_b^{2} )$$
$$pd_{2\,mes} = ( F_a^{2} \cdot pd_{1a\,mes} - F_b^{2} \cdot pd_{1b\,mes} ) / ( F_a^{2} - F_b^{2} )$$
$$\cdots$$
$$pd_{N\,mes} = ( F_a^{2} \cdot pd_{1a\,mes} - F_b^{2} \cdot pd_{1b\,mes} ) / ( F_a^{2} - F_b^{2} )$$

La pseudo-distance $pd_{imes}$ est également appelée pseudo-distances "iono-free" dans la suite de la description.

On obtient donc en remplaçant les valeurs de pd1a mes et de pd1b mes, les relations suivantes :

$$pd_{1\,mes} = pd_1 + (\Delta t_h + B_a) + \beta.\Delta B_{HF} + (\alpha.v_{1a} + \beta.v_{1b})$$
$$pd_{2\,mes} = pd_2 + (\Delta t_h + B_a) + \beta.\Delta B_{HF} + (\alpha.v_{2a} + \beta.v_{2b})$$
$$\cdots$$
$$pd_{N\,mes} = pd_N + (\Delta t_h + B_a) + \beta.\Delta B_{HF} + (\alpha.v_{Na} + \beta.v_{Nb})$$

Avec :

■ $\alpha = F_a^2 / (F_a^2 - Fb^2)$
■ $\beta = Fb2 / (Fb^2 - F_a^2)$
■ $\alpha + \beta = 1$

On obtient les expressions simplifiées des pseudo-distances iono-free suivantes :

$$pd_{1\,mes} = pd_1 + \Delta t + v_1$$

$$pd_{2\,mes} = pd_2 + \Delta t + v_2$$

$$pd_{N\,mes} = pd_N + \Delta t + v_N$$

Avec :

■ $\Delta t$ : Nouvelle inconnue en remplacement de $\Delta t_h$

$$\Delta t = \Delta t_h + B_a + \beta.\Delta B_{HF}$$

■ $v_i$: Erreur de mesure "iono-free" pour le satellite n°i

$$\dot{v_i} = \alpha.v_{ia} + \beta.v_{ib}$$

Il est possible d'obtenir la variance des bruits de mesure associés :

$$\sigma_i{}^2 = var[\,v_i\,]$$

$$\sigma_i{}^2 = \alpha^2.var[\,v_{ia}\,] + \beta^2.var[\,v_{ib}\,]$$

$$\sigma_i{}^2 = \alpha^2.\sigma_a{}^2 + \beta^2.\sigma_b{}^2$$

Si $var[v_{ia}] = \sigma_a{}^2$ et $var[v_{ib}] = \sigma^b{}_2$ pour tous les satellites, et si $\sigma_a{}^2 = \sigma_b{}^2$, alors : $\sigma_i{}^2 = (\alpha^2 + \beta^2).\sigma^2$

Une application numérique, avec les paramètres suivants :

■ Fa = $F_{L1}$ = 1575.42 MHz

■ $F_b$ = $F_{E5b}$ = 1207.14 MHz,

donne les ordres de grandeurs suivants des valeurs de $\alpha$ et $\beta$ :

$\alpha$ = 4.28

$\beta$ = -3.28

L'écart-type du bruit sur les mesures iono-free est amplifié par rapport aux mesures mono-fréquence d'un facteur :

$$\sqrt{\alpha^2 + \beta^2} = 5.32$$

Le fait de supprimer l'erreur due au retard ionosphérique qui est prépondérante justifie que l'on accepte de dégrader le bruit de mesure.
Dans le cas où on a que des mesures "iono free"
On pose :

7

$$\begin{bmatrix} pd_{1\,mes} - pd_{1\,calculée} \\ pd_{2\,mes} - pd_{2\,calculée} \\ \vdots \\ pd_{N\,mes} - pd_{N\,calculée} \end{bmatrix} = \begin{bmatrix} \cos\theta_{1x} & \cos\theta_{1y} & \cos\theta_{1z} & 1 \\ \cos\theta_{2x} & \cos\theta_{2y} & \cos\theta_{2z} & 1 \\ \vdots & \vdots & \vdots & 1 \\ \cos\theta_{Nx} & \cos\theta_{Ny} & \cos\theta_{Nz} & 1 \end{bmatrix} \begin{bmatrix} x - x_0 \\ y - y_0 \\ z - z_0 \\ \Delta t \end{bmatrix} + \begin{bmatrix} v_1 \\ v_2 \\ \vdots \\ v_N \end{bmatrix}$$

La pseudo-distance $pd_{i\,calculée}$ est la valeur calculée entre le satellite i et le récepteur GNSS. Elle peut correspondre par exemple à la valeur de la mesure théorique pronostiquée à partir de la position précédemment résolue.

$$pd_{i\,calculée} = \sqrt{(x_0 - x_i)^2 + (y_0 - y_i)^2 + (z_0 - z_i)^2} \ ,$$

Les coordonnées $x_0$, $y_0$, $z_0$ correspondent à la position estimée à priori de l'antenne du récepteur.
On fait donc intervenir l'écart $\Delta pd_i$ entre la pseudo-distance mesurée et la pseudo-distance calculée entre le satellite i et le récepteur GNSS.

$$\begin{bmatrix} \Delta pd_1 \\ \Delta pd_2 \\ \vdots \\ \Delta pd_N \end{bmatrix} = H \begin{bmatrix} \Delta x \\ \Delta y \\ \Delta z \\ \Delta t \end{bmatrix} + \begin{bmatrix} v_1 \\ v_2 \\ \vdots \\ v_N \end{bmatrix}$$

En notant :

$$H = \begin{bmatrix} \cos\theta_{1x} & \cos\theta_{1y} & \cos\theta_{1z} & 1 \\ \cos\theta_{2x} & \cos\theta_{2y} & \cos\theta_{2z} & 1 \\ \vdots & \vdots & \vdots & 1 \\ \cos\theta_{Nx} & \cos\theta_{Ny} & \cos\theta_{Nz} & 1 \end{bmatrix}$$

On résout au sens des moindres carrés pondérés l'équation suivante :

$$\begin{bmatrix} \Delta x_{estimé} \\ \Delta y_{estimé} \\ \Delta z_{estimé} \\ \Delta t_{estimé} \end{bmatrix} = H^* \begin{bmatrix} \Delta pd_1 \\ \Delta pd_2 \\ \vdots \\ \Delta pd_N \end{bmatrix}$$

avex $H^* = (H^T W^T W H)^{-1} H^T W^T$ et

$$W = \begin{bmatrix} 1/\sigma_1^2 & 0 & .. & 0 \\ 0 & 1/\sigma_2^2 & 0 & : \\ : & 0 & . & 0 \\ 0 & .. & 0 & 1/\sigma_N^2 \end{bmatrix}$$

Les biais Ba et $\beta.\Delta B_{HF}$, introduits par le canal HF, sont communs aux satellites et donc peuvent être intégrés à l'erreur d'horloge $\Delta$th avec l'équation $\Delta t = \Delta th + Ba + \beta.\Delta B_{HF}$, où $\Delta t$ est une nouvelle inconnue.

L'erreur d'horloge est une inconnue du système à résoudre. L'introduction du biais Ba et du biais $\beta.\Delta B_{HF}$ dans l'erreur d'horloge $\Delta$th revient à effectuer un changement de variable correspondant à un nouveau bruit $\Delta t$ à déterminer.

Les biais $B_a$ et $\beta.\Delta B_{HF}$ n'ont donc pas d'effet sur la mesure de position x, y, z.

Cette hypothèse nécessite de considérer qu'il n'y a que des mesures bi-fréquences.

En revanche dans le cadre de l'invention, le récepteur dispose de mesures mono-fréquences sur certains satellites et de mesures bi-fréquences sur d'autres.

Les calculs suivants correspondent au cas particulier où seul le satellite 1 est mono-fréquence pour simplifier l'écriture des équations. Le cas d'une pluralité de satellites en mono-fréquence se traite pareillement.

Concernant le satellite mono-fréquence, on considère l'expression de la pseudo-distance mesurée. Concernant les satellites bi-fréquences, on considère les expressions des pseudo-distances iono-free.

$$pd_{1a\,mes} = pd_1 + (\Delta t_h + B_a) \qquad\qquad + B_{iono\,1a} + v_{1a} \qquad \text{Satellite mono-fréquence a}$$
$$pd_{2\,mes} = pd_2 + (\Delta t_h + B_a) + \beta.\Delta B_{HF} \qquad + v_2 \qquad \text{Satellite bi-fréquence}$$
$$pd_{N\,mes} = pd_N + (\Delta t_h + B_a) + \beta.\Delta B_{HF} \qquad + v_N \qquad \text{Satellite bi-fréquence}$$

On remarque que $pd_{1a\,mes}$ fait explicitement apparaître un terme lié à la traversée ionosphérique : $B_{iono\,1a}$.

Un avantage de l'invention est de réduire l'effet du biais inter-fréquence dû aux canaux HF dans le récepteur GNSS bi-fréquence. Un autre avantage de l'invention est que le bruit ionosphérique résiduel lorsque des satellites mono-fréquence et bi-fréquences permettent de localiser un récepteur GNSS.

L'équation de $pd_{1a\,mes}$ peut s'écrire également :

$$pd_{1a\,mes} = pd_1 + (\Delta t_h + B_a) + \beta.\Delta B_{HF} + v_1 + B_{iono\,1a} - \beta.\Delta B_{HF} + (v_{1a} - v_1)$$
$$pd_{1a\,mes} = pd_{1\,mes} \qquad\qquad\qquad + b_{1a}$$

On pose :

$$\begin{bmatrix} pd_{1a\,mes} - pd_{1\,calculée} \\ pd_{2\,mes} - pd_{2\,calculée} \\ : \\ pd_{N\,mes} - pd_{N\,calculée} \end{bmatrix} = \begin{bmatrix} pd_{1\,mes} - pd_{1\,calculée} \\ pd_{2\,mes} - pd_{2\,calculée} \\ : \\ pd_{N\,mes} - pd_{N\,calculée} \end{bmatrix} + \begin{bmatrix} b_{1a} \\ 0 \\ : \\ 0 \end{bmatrix}$$

$$
\begin{bmatrix}
pd_{1a\,mes} - pd_{1\,calculée} \\
pd_{2\,mes} - pd_{2\,calculée} \\
\vdots \\
pd_{N\,mes} - pd_{N\,calculée}
\end{bmatrix}
=
\begin{bmatrix}
\cos\theta_{1x} & \cos\theta_{1y} & \cos\theta_{1z} & 1 \\
\cos\theta_{2x} & \cos\theta_{2y} & \cos\theta_{2z} & 1 \\
\vdots & \vdots & \vdots & \vdots \\
\cos\theta_{Nx} & \cos\theta_{Ny} & \cos\theta_{Nz} & 1
\end{bmatrix}
\begin{bmatrix}
x - x_0 \\
y - y_0 \\
z - z_0 \\
\Delta t
\end{bmatrix}
+
\begin{bmatrix}
v_1 \\
v_2 \\
\vdots \\
v_N
\end{bmatrix}
+
\begin{bmatrix}
b_{1a} \\
0 \\
\vdots \\
0
\end{bmatrix}
$$

La pseudo-distance $Pd_{icalculée}$ est introduite dans les équations aux fins d'estimer l'erreur dans l'évaluation de position du récepteur GNSS. Cette pseudo-distance correspond à une valeur de la pseudo-distance calculée par exemple à un instant précédent le calcul de la pseudo-distance $p_{di\,mes}$. Il peut s'agir par exemple d'un algorithme de convergence. Dans un autre cas de réalisation il peut s'agir de la pseudo-distance pronostiquée à partir d'un autre calcul.

Avec :

- $b_{1a} = B_{iono\,1a} - \beta.\Delta B_{HF} + (V_{1a} - V_1)$
- $(v_{1a} - v_1) = (\alpha-1) - v_{1a} - \beta.v_{1b} = \beta.(v_{1a} - v_{1b})$

On obtient alors l'expression simplifiée suivante à partir des calculs précédents dans le cas de satellite bi-fréquence :

$$
\begin{bmatrix}
\Delta pd_{1a} \\
\Delta pd_2 \\
\vdots \\
\Delta pd_N
\end{bmatrix}
= H
\begin{bmatrix}
\Delta x \\
\Delta y \\
\Delta z \\
\Delta t
\end{bmatrix}
+
\begin{bmatrix}
v_1 \\
v_2 \\
\vdots \\
v_N
\end{bmatrix}
+
\begin{bmatrix}
b_{1a} \\
0 \\
\vdots \\
0
\end{bmatrix}
$$

On résout :

$$
\begin{bmatrix}
\Delta x_{estimé} \\
\Delta y_{estimé} \\
\Delta z_{estimé} \\
\Delta t_{estimé}
\end{bmatrix}
= H^*
\begin{bmatrix}
\Delta pd_{1a} \\
\Delta pd_2 \\
\vdots \\
\Delta pd_N
\end{bmatrix}
= H^*\left(
\begin{bmatrix}
\Delta pd_1 \\
\Delta pd_2 \\
\vdots \\
\Delta pd_N
\end{bmatrix}
+
\begin{bmatrix}
b_{1a} \\
0 \\
\vdots \\
0
\end{bmatrix}\right)
$$

On introduit une erreur supplémentaire égale à :

$$
\begin{bmatrix}
\varepsilon x_{estimé} \\
\varepsilon y_{estimé} \\
\varepsilon z_{estimé} \\
\varepsilon t_{estimé}
\end{bmatrix}
= H^*
\begin{bmatrix}
b_{1a} \\
0 \\
\vdots \\
0
\end{bmatrix}
$$

Avec : $b_{1a} = B_{iono\,1\alpha} - \beta.\Delta B_{HF} + \beta.(v_{1a} - v_{1b})$

Le biais introduit sur la position peut être très grand à cause du biais inter-fréquence $\Delta B$ amplifié par le coefficient $\beta$, en plus de l'erreur ionosphérique non corrigée sur le satellite mono-fréquence.

L'ordre de grandeur de $B_{iono\,1a}$ est de 20 mètres

L'ordre de grandeur de $\Delta B_{HF}$ est de 20 mètres

L'ordre de grandeur de $\beta.\Delta B_{HF}$ est donc de 60 mètres, en considérant les valeurs de $\alpha$ et de $\beta$ précédemment

calculées.

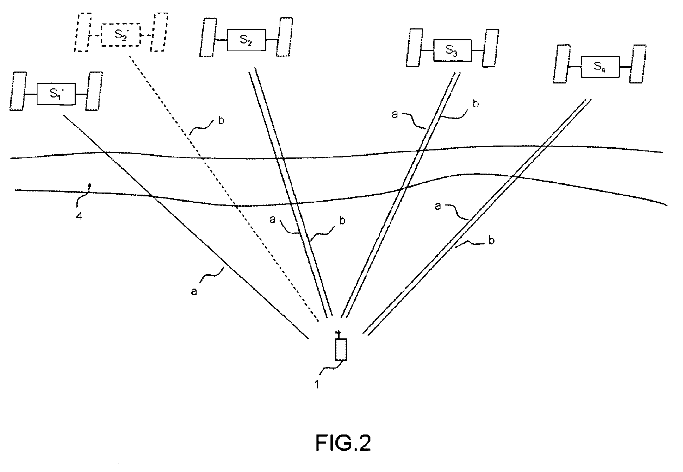

L'invention permet d'estimer d'une part le biais inter-fréquence et d'autre part de le corriger dans la configuration où la position d'un récepteur GNSS est calculée à partir de satellites mono-fréquences et de satellites bi-fréquences, correspondant par exemple au cas de la figure 2.

La figure 2 représente un récepteur GNSS 1 recevant des signaux 2, 3 de trois satellites bi-fréquences $S_2$, $S_3$, $S_4$ et un signal 2 d'un satellite Si' mono-fréquence. Les signaux émis traversent tous l'ionosphère 4.

Une variante de réalisation de l'invention permet de traiter le cas d'une pluralité de satellites mono-fréquences. Les satellites mono-fréquences émettant soient des signaux sur une première fréquence 2 soit sur une seconde fréquence 3. Un cas de réalisation représente un second satellite $S_2$' mono-fréquence émettant sur une fréquence 3 différente de la fréquence du premier satellite $S_1$' mono-fréquence.

Selon le nombre de satellites mono-fréquence et bi-fréquence, l'invention permet de traiter les différents cas de figures, notamment sur le cas des pseudo-distances compensées par le biais inter-fréquence des canaux HF du récepteur.

La suite de la description détaille les différents cas de figures.

Une première estimation instantanée du biais inter-fréquence peut-être exprimé par une moyenne des mesures des signaux provenant des satellites bi-fréquences :

$$\Delta B_{estimé} \overset{def}{=} \frac{1}{(N-1)} \sum_{i=2}^{N} (pd_{ib\,mes} - pd_{ia\,mes})$$

Le biais inter-fréquence se décompose en une partie représentée par le biais inter-fréquence entre les voies des canaux HF du récepteur, une partie représentée par le biais le biais inter-fréquence ionosphérique et une partie comprenant les erreurs de mesures hors retard ionosphérique.

Etant donné qu'il n'est pas possible de dissocier dans l'estimation du biais inter-fréquence la composante liée au biais inter-fréquence analogique des voies HF du biais liées à la traversée de la ionosphère et des erreurs liées au bruit de mesure, on prend en compte dans l'estimation la totalité du biais inter-fréquence.

On obtient l'expression littérale suivante :

$$\Delta B_{estimé} = \Delta B_{HF} + \frac{1}{(N-1)} \sum_{i=2}^{N} (B_{iono\,b} - B_{iono\,a}) + \frac{1}{(N-1)} \sum_{i=2}^{N} (v_{ib} - v_{ia})$$

$$\Delta B_{estimé} = \Delta B_{HF} - \frac{1}{\beta} B_{iono\,moy} + v_{moy}$$

$$B_{iono\,moy} = \frac{1}{(N-1)} \sum_{i=2}^{N} B_{iono\,ia} \qquad v_{moy} = \frac{1}{(N-1)} \sum_{i=2}^{N} (v_{ib} - v_{ia})$$

$$B_{iono\,i\,b} - B_{iono\,i\,a} = CET_i ( 1 / F_b{}^2 - 1 / F_a{}^2 )$$

$$B_{iono\,i\,b} - B_{iono\,i\,a} = CET_i / F_a{}^2 . ( F_a{}^2 - F_b{}^2 ) / F_b{}^2$$

$$B_{iono\,i\,b} - B_{iono\,i\,a} = - CET_i / F_a{}^2 / \beta$$

$$B_{iono\,i\,b} - B_{iono\,i\,a} = -B_{iono\,ia} / \beta$$

Dans un autre mode de réalisation de l'invention il est possible de calculer l'estimation du biais inter-fréquence en prenant en compte la position du satellite. En effet, l'estimation est biaisée par le retard ionosphérique, dont l'amplitude dépend de l'élévation du satellite. On prend en compte dans l'estimation l'obliquité du chemin optique par rapport à la couche ionosphérique. Les satellites hauts ont un retard ionosphérique plus faible. Il est possible de leur affecter un coefficient plus fort dans une moyenne pondérée.

Dans un autre mode de réalisation de l'invention il est possible de calculer l'erreur due au biais inter-fréquence par une estimation filtrée.

On applique un filtre du premier ordre à l'estimation instantanée, avec une constante de temps $\tau$ représentative des évolutions du biais inter-fréquence.

On obtient la relation suivante :

$$\Delta B_{estimé\ filtrée}(n) \overset{def}{=} (1 - \frac{1}{\tau})\Delta B_{estimé\ filtrée}(n-1) + \frac{1}{\tau}\Delta B_{estimé}(n)$$

Les mesures sont échantillonnées à différents instants d'indice n avec une période inférieure à la corrélation du retard ionosphérique. Un ordre de grandeur de l'échantillonnage est de l'ordre de 1000 secondes dans un cas privilégié de réalisation.

L'erreur ionosphérique est alors moyennée.

Dans un autre mode de réalisation, on peut aussi faire une simple moyenne donnant la relation suivante :

$$\Delta B_{estimé\ filtrée}(n) \overset{def}{=} \frac{1}{K}\sum_{k=n-K+1}^{k=n}\Delta B_{estimé}(k).$$

L'invention permet d'estimer le biais inter-fréquence mais également de corriger cette erreur sur les mesures bi-fréquences ou mono-fréquence.

Un mode de réalisation de l'invention permet de compenser la valeur du biais estimé sur les mesures bi-fréquences uniquement.

En gardant les notations précédentes et en considérant pour l'exemple d'un unique satellite mono-fréquence émettant sur la fréquence Fa et d'une pluralité de satellites bi-fréquences émettant sur les fréquences Fa et Fb. On a les relations suivantes avec le calcul de l'estimation instantanée du biais inter-fréquence :

$$pd_{1a\ mes} = pd_{1a\ mes}$$
$$pd_{2\ mes}{}' = pd_{2\ mes} - \beta.\Delta B_{estimé}$$
$$\ldots$$
$$pd_{N\ mes}{}' = pd_{N\ mes} - \beta.\Delta B_{estimé}$$

où $[pd_{imes}{}']i \in [2,N]$ sont les pseudos distances iono free corrigées par une estimation d'un biais inter-fréquence estimé.

Dans un mode de réalisation, en utilisant la valeur algébrique de la première estimation du biais inter-fréquence, on peut écrire :

$$pd_{1a\ mes} = pd_1 + (\Delta t_h + B_a) + B_{iono\ 1a} + v_{1a}$$
$$pd_{2\ mes}{}' = pd_2 + (\Delta t_h + B_a) + B_{iono\ moy} - \beta.v_{moy} + v_2$$
$$\ldots$$
$$pd_{N\ mes}{}' = pd_N + (\Delta t_h + B_a) + B_{iono\ moy} - \beta.v_{moy} + v_N$$

On remarque, par ailleurs, que l'expression de $pd_{1a\ mes}$ peut également s'écrire, par l'introduction de termes de la manière suivante :

$$pd_{1a\ mes} = pd_1 + (\Delta t_h + B_a) + B_{iono\ moy} - \beta.v_{moy} + v_1 + B_{iono\ 1a} - B_{iono\ moy} + \beta.v_{moy} + (v_{1a} - v_1)$$

$$pd_{1a\ mes} = pd_{1\ mes} \qquad\qquad + b_{1a}$$

En posant :

$$\Delta t' = \Delta t_h + B_a + B_{iono\ moy} - \beta.v_{moy}$$

$$b_{1a} = B_{iono\ 1a} - B_{iono\ moy} + \beta.v_{moy} + (v_{1a} - v_1)$$

On obtient l'expression de $pd_i\ mes = pd_i + \Delta t' + v_i$

Avec la définition de $pd_{i\ calculée}$ défini précédemment, on peut écrire :

$$
\begin{bmatrix}
pd_{1a\ mes} - pd_{1\ calculée} \\
pd_{2\ mes}' - pd_{2\ calculée} \\
\vdots \\
pd_{N\ mes}' - pd_{N\ calculée}
\end{bmatrix}
=
\begin{bmatrix}
pd_{1\ mes}' - pd_{1\ calculée} \\
pd_{2\ mes}' - pd_{2\ calculée} \\
\vdots \\
pd_{N\ mes}' - pd_{N\ calculée}
\end{bmatrix}
+
\begin{bmatrix}
b_{1a} \\
0 \\
\vdots \\
0
\end{bmatrix}
$$

$$
\begin{bmatrix}
pd_{1a\ mes} - pd_{1\ calculée} \\
pd_{2\ mes}' - pd_{2\ calculée} \\
\vdots \\
pd_{N\ mes}' - pd_{N\ calculée}
\end{bmatrix}
=
\begin{bmatrix}
\cos\theta_{1x} & \cos\theta_{1y} & \cos\theta_{1z} & 1 \\
\cos\theta_{2x} & \cos\theta_{2y} & \cos\theta_{2z} & 1 \\
\vdots & \vdots & \vdots & \vdots \\
\cos\theta_{Nx} & \cos\theta_{Ny} & \cos\theta_{Nz} & 1
\end{bmatrix}
\begin{bmatrix}
x - x_0 \\
y - y_0 \\
z - z_0 \\
\Delta t'
\end{bmatrix}
+
\begin{bmatrix}
v_1 \\
v_2 \\
\vdots \\
v_N
\end{bmatrix}
+
\begin{bmatrix}
b_{1a} \\
0 \\
\vdots \\
0
\end{bmatrix}
$$

Cette expression peut s'écrire également :

$$
\begin{bmatrix}
\Delta pd_{1a} \\
\Delta pd_2' \\
\vdots \\
\Delta pd_N'
\end{bmatrix}
=
\begin{bmatrix}
\Delta pd_1' \\
\Delta pd_2' \\
\vdots \\
\Delta pd_N'
\end{bmatrix}
+
\begin{bmatrix}
b_1 \\
0 \\
\vdots \\
0
\end{bmatrix}
= H
\begin{bmatrix}
\Delta x \\
\Delta y \\
\Delta z \\
\Delta t'
\end{bmatrix}
+
\begin{bmatrix}
v_1 \\
v_2 \\
\vdots \\
v_N
\end{bmatrix}
+
\begin{bmatrix}
b_{1a} \\
0 \\
\vdots \\
0
\end{bmatrix}
$$

$$\begin{bmatrix} \Delta x_{estimé} \\ \Delta y_{estimé} \\ \Delta z_{estimé} \\ \Delta t_{estimé} \end{bmatrix} = H^* \begin{bmatrix} \Delta pd_{1a} \\ \Delta pd_2{}' \\ \vdots \\ \Delta pd_N{}' \end{bmatrix} = H^* \left( \begin{bmatrix} \Delta pd_1{}' \\ \Delta pd_2{}' \\ \vdots \\ \Delta pd_N{}' \end{bmatrix} + \begin{bmatrix} b_{1a} \\ 0 \\ \vdots \\ 0 \end{bmatrix} \right)$$

On introduit donc une erreur, par rapport au cas de mesures "iono-free", égale à :

$$\begin{bmatrix} \mathcal{E}x_{estimé} \\ \mathcal{E}y_{estimé} \\ \mathcal{E}z_{estimé} \\ \mathcal{E}t_{estimé} \end{bmatrix} = H^* \begin{bmatrix} b_{1a} \\ 0 \\ \vdots \\ 0 \end{bmatrix}$$

Avec :

$$b_{1a} = B_{iono\ 1a} - B_{iono\ moy} + \beta.v_{moy} + \beta.(v_{1b} - v_{1a})$$

Le biais introduit sur la position est réduit par rapport au cas où on mélange des mesures mono-fréquence et des mesures "iono-free" sans compensation du biais inter-fréquence car on n'a plus le biais $\Delta B$ multiplié par le coefficient $\beta$ qui était le terme prépondérant de l'erreur.

En outre on a réduit l'erreur ionosphérique sur le satellite mono-fréquence d'une quantité égale à la valeur moyenne de l'erreur ionosphérique.

En effet le terme $B_{iono\ 1a}$ correspondent à l'erreur ionosphérique résiduelle est a diminué de la valeur de $B_{iono\ moy}$.

Un autre mode de réalisation permet de considérer le cas où il y a une pluralité de satellites mono-fréquences dont au moins deux émettent sur des fréquences différentes.

Dans cet exemple, un premier satellite mono-fréquence émet sur la fréquence Fa, un second satellite mono-fréquence émet sur la fréquence Fb et N-2 satellite bi-fréquences émettent sur les fréquences Fa et Fb.

On a les relations suivantes :

$$pd_{1a\ mes} = pd_1 + (\Delta t_h + B_a) \qquad + B_{iono\ 1a} + v_{1a}, \text{ Satellite mono-fréquence a}$$
$$pd_{2b\ mes} = pd_2 + (\Delta t_h + B_a) + \Delta B + B_{iono\ 2b} + v_{2b}, \text{ Satellite mono-fréquence b}$$
$$pd_{3\ mes} = pd_3 + (\Delta t_h + B_a) + \beta.\Delta B \qquad + v_3, \text{ Satellite bi-fréquence}$$
$$\ldots$$
$$pd_{N\ mes} = pd_N + (\Delta t_h + B_a) + \beta.\Delta B \qquad + v_N, \text{ Satellite bi-fréquence}$$

On présente ici le cas particulier où seuls les satellites 1 et 2 sont mono-fréquence, respectivement sur les fréquences Fa et Fb. Les équations sont simplifiées par rapport à un cas où les satellites mono-fréquences seraient plus nombreux encore.

Dans les variantes de réalisations de l'invention où une pluralité de satellites mono-fréquence est à prendre en considération dans la résolution de la position d'un récepteur GNSS, l'invention s'applique en adaptant les équations qui suivent dans la description.

Dans un mode de calcul, le biais estimé est compensé sur les mesures bi-fréquences et sur la fréquence Fb. Il serait équivalent de compenser l'erreur sur les mesures bi-fréquences et sur la fréquence Fa.

On obtient les équations suivantes :

$$pd_{1a\ mes} = pd_{1a\ mes}$$
$$pd_{2b\ mes}' = pd_{2b\ mes} - \ \Delta B_{estimé}$$
$$pd_{3\ mes}' = pd_{3\ mes} - \beta.\Delta B_{estimé}$$
$$\ldots$$
$$pd_{N\ mes}' = pd_{N\ mes} - \beta.\Delta B_{estimé}$$

où $pd_{2bmes}'$ est une pseudo-distance mesurée entre le second satellite et le récepteur lorsque le signal est porté par la fréquence Fb et ;

où $[pd_{imes}']_{i \in [2,N]}$ sont les pseudos distances iono free corrigées par une estimation d'un biais inter-fréquence estimé.

D'où :

$$pd_{1a\ mes} = pd_1 + (\Delta t_h + B_a) + B_{iono\ 1a} \qquad\qquad + v_{1a}$$
$$pd_{2b\ mes}' = pd_2 + (\Delta t_h + B_a) + B_{iono\ 2b} + 1/\beta.B_{iono\ moy} - v_{moy} + v_{2b}$$
$$pd_{3\ mes}' = pd_3 + (\Delta t_h + B_a) + \qquad\qquad B_{iono\ moy} - \beta.v_{moy} + v_3$$
$$\ldots$$
$$pd_{N\ mes}' = pd_N + (\Delta t_h + B_a) + \qquad\qquad B_{iono\ moy} - \beta.v_{moy} + v_N$$

On remarque par ailleurs que $pd_{1a\ mes}$ peut s'écrire :

$$pd_{1a\ mes} = pd_1 + (\Delta t_h + B_a) + B_{iono\ moy} - \beta.v_{moy} + v_1 \quad + \quad B_{iono\ 1a} - \quad B_{iono\ moy} +$$
$$\beta.v_{moy} + (v_{1a} - v_1)$$

Cette équation peut également s'écrire :

$$pd_{1a\ mes} = pd_{1\ mes}' + b_{1a}$$

avec :

- $pd_{1\ mes}' = pd_1 + (\Delta t_h + B_a) + B_{iono\ moy} - \beta.v_{moy} + v_1$
- $b_{1a} = B_{iono\ 1a} - B_{iono\ moy} + \beta.v_{moy} + (v_{1a} - v_1)$

On remarque également que $pd_{1a\ mes}$ peut s'écrire :

$$pd_{2b\ mes}' = pd_2 + (\Delta t_h + B_a) + B_{iono\ moy} - \beta.v_{moy} + v_2 \quad + \quad B_{iono\ 2b} - (1-1/\beta).B_{iono\ moy} +$$
$$(\beta-1).v_{moy} + (v_{1a} - v_1)$$

Cette équation peut également s'écrire :

$$pd_{2b\ mes}' = pd_{2\ mes}' + b_{2b}$$

avec :

- $pd_{2\ mes}' = Pd_2 + (\Delta t_h + B_a) + B_{iono\ moy} - \beta.v_{moy} + v_2$
- $b_{2b} = B_{iono\ 2b} - (\alpha/\beta al).\ B_{iono\ moy} - \alpha.v_{moy} + (v_{1a} - v_1)$

On retrouve les mêmes termes dans $b_{1a}$ et $b_{2b}$ avec des coefficients légèrement différents.

L'erreur sur la position devient :

$$\begin{bmatrix} \mathcal{E}x_{estim\acute{e}} \\ \mathcal{E}y_{estim\acute{e}} \\ \mathcal{E}z_{estim\acute{e}} \\ \mathcal{E}t_{estim\acute{e}} \end{bmatrix} = H^* \begin{bmatrix} b_{1a} \\ 0 \\ 0 \\ \vdots \\ 0 \end{bmatrix} + H^* \begin{bmatrix} 0 \\ b_{1b} \\ 0 \\ \vdots \\ 0 \end{bmatrix}$$

La correction du biais inter-fréquence peut-être compensée avant ou après la combinaison iono-free.

On remarque que dans les termes résiduels $b_{1a}$ et $b_{2b}$ d'erreurs non corrigées, les termes prépondérant relatif à $\beta.\Delta B_{HF}$ a été éliminé.

Par ailleurs, les erreurs liées au retard ionosphérique respectivement $B_{iono\ 1a}$ et $B_{iono\ 2b}$ dans chacune des équations sont diminuées respectivement de $B_{iono\ moy}$ et de $(\alpha/\beta)$. $B_{iono\ moy}$.

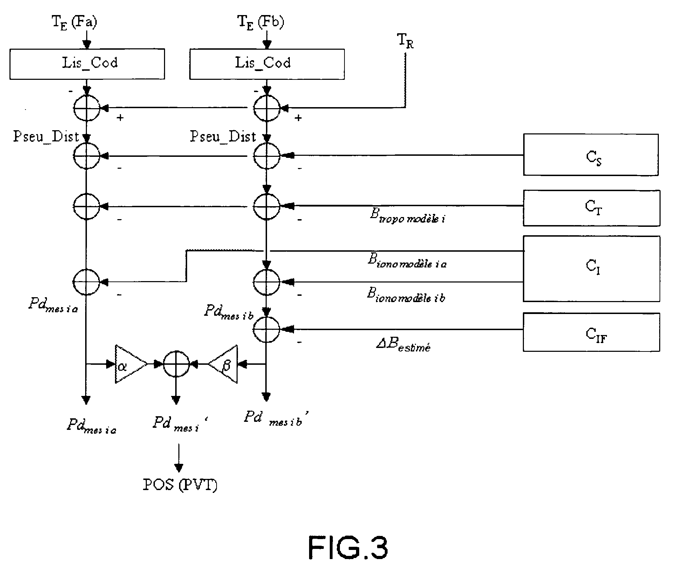

La figure 3 représente l'ordre des corrections, notamment celle de la correction du biais inter-fréquence dans le canal HF, qui peut intervenir selon une variante de réalisation avant la combinaison iono-free ou après.

La figure 3 représente les calculs effectués sur les mesures d'un premier signal reçu d'un satellite à l'instant courant t sur une fréquence Fa dont le temps d'émission mesuré à l'instant courant t est noté $T_E(Fa)$ et un second signal reçu du même satellite à l'instant courant t sur une fréquence Fb dont le temps d'émission mesuré à l'instant courant t est noté $T_E(Fb)$. Le récepteur opère une étape de lissage des mesures des temps d'émissions, notée Lis_Cod, grâce aux mesures de phase de porteuses sur les fréquences Fa et Fb. Les temps d'émission mesurés $T_E(Fa)$ et $T_E(Fb)$ sont soustraits au temps de réception mesuré $T_R$ pour produire des pseudo-distances mesurées Pseudo_Dist, respectivement sur les fréquences Fa et Fb.

Le récepteur GNSS opère une première série de corrections Cs comprenant la correction des erreurs systèmes, et éventuellement selon les modes de réalisations cette première série de corrections peut comprendre la correction de l'effet Sagnac, la correction dues aux décalages des horloges de chaque satellite et enfin les effets relativistes.

On obtient des mesures de pseudo-distances après un premier jeu de corrections Cs.

Une seconde série de compensations $C_T$ est réalisée sur les signaux reçus. La compensation $C_T$ corrige les erreurs liées aux retards troposphériques par l'introduction d'un biais de compensation, noté $B_{tropo}$-modèle-i, qui est calculé sur la base d'un modèle.

Enfin les retards ionosphériques sont corrigés par une troisième série de corrections $C_I$. Un biais de compensation $B_{iono}$ modèle i dans le traitement des signaux, notamment de chacune des porteuses Fa et Fb, est introduit pour compenser les retards ionosphériques.

Enfin, l'invention propose d'introduire un biais de compensation des mesures inter-fréquence $\Delta B_{estim\acute{e}}$ de manière à corriger le biais inter-canal HF $\Delta B_{HF}$.

La compensation $C_{IF}$ permet d'introduire une correction des mesures inter-fréquences dans les canaux HF du récepteur. Selon les modes de réalisation, la compensation $C_{IF}$ peut être effectuée :

■ soit sur les mesures des pseudo-distances bi-fréquences avant le calcul des pseudo-distances iono free ;
■ soit sur les mesures des pseudo-distances iono-free.

La figure 3 représente le cas de figure où les corrections sont faites en amont du calcul des pseudo-distances iono-free entre les satellites et le récepteur GNSS. C'est-à-dire que les corrections sont effectuées sur les mesures des pseudo-distances $pd_{mes\ ib}$ et $pd_{mes\ ia}$ avant leur combinaison en vue d'obtenir les pseudo-distances iono free $pd_{mes\ i}$ entre chaque satellite et le récepteur.

Dans l'exemple de la figure 3, la compensation $\Delta B_{estim\acute{e}}$ appliquée au calcul des pseudo-distances permet d'obtenir la mesure de la pseudo-distance $pd_{mes\ ib}'$ à partir de la mesure $pd_{mes\ ib}$.

On a la relation suivante exprimant la pseudo-distance compensée :

$$pd_{mes\ ib}' = pd_{mes\ ib} - \Delta B_{estim\acute{e}}$$

Dans l'exemple de la figure 3, la correction est effectuée sur la pseudo-distance mesurée sur la fréquence Fb avant le calcul des pseudos distances iono free. Les pseudo-distances iono free sont calculées à partir des mesures de la pseudo-distance $pd_{mes\ ia}$ et de la pseudo-distance corrigée $pd_{mes\ ib'}$.

La position POS(PVT) est alors déterminée après toutes les prises en compte de corrections de compensation dans le récepteur à partir du calcul des pseudo-distances iono-free $Pd_{mes\ i'}$.

Dans un autre mode de réalisation de l'invention la compensation liée aux corrections du biais inter-fréquence sont réalisées sur les mesures mono-fréquence.

Dans le cas où un seul satellite mono fréquence envoie un signal au récepteur GNSS parmi les signaux reçus bi-fréquences, on les relations suivantes :

$$\begin{aligned}
pd_{1a\ mes}{}'' &= pd_{1a\ mes} + \beta.\Delta B_{estimé} \\
pd_{2\ mes} &= pd_{2\ mes} \\
&\ldots \\
pd_{N\ mes} &= pd_{N\ mes}
\end{aligned}$$

En notant $pd_{1a\ mes}''$ la mesure de la pseudo-distance mono-fréquence corrigée sur la fréquence Fa.

Dans le cas où une pluralité de satellites mono-fréquence envoie un signal au récepteur GNSS, ce dernier reçoit alors des signaux bi-fréquences et mono-fréquences.

Dans ce dernier exemple, seuls les satellites 1 et 2 sont des satellites mono-fréquences.

On a les relations suivantes :

$$\begin{aligned}
pd_{1a\ mes}{}'' &= pd_{1a\ mes} & &+ \beta.\Delta B_{estimé} \\
pd_{2b\ mes}{}'' &= pd_{2b\ mes} & - \Delta B_{estimé} &+ \beta.\Delta B_{estimé} \\
pd_{3\ mes} &= pd_{3\ mes} \\
&\ldots \\
pd_{N\ mes} &= pd_{N\ mes}
\end{aligned}$$

Dans la suite de la description, il est détaillé des variantes de réalisation, notamment de la correction des erreurs ionosphériques ou encore des erreurs "système" effectuées en amont des corrections du biais inter-fréquence des canaux HF du récepteur.

Un mode de réalisation permet de corriger l'erreur ionosphérique en prenant en compte un modèle prédéfini tout en corrigeant, selon un mode de réalisation de l'invention, le biais inter-fréquence dans les canaux HF.

Tant que l'on a des mesures bi-fréquences iono-free on peut considérer que l'élimination des biais ionosphériques est parfaite et que les modèles d'erreurs tels que les modèles connus sous les noms "Klobuchar" ou encore "Nequick" sont inutiles.

En revanche, dans le cadre de l'invention, le récepteur GNSS reçoit des signaux mono-fréquences et bi-fréquences provenant d'un ensemble de satellites, lors de la résolution de la position, il est préférable selon une variante privilégiée de l'invention d'appliquer les corrections ionosphériques aux mesures mono-fréquences.

Dans ce cas le biais inter-fréquence doit être estimé à partir des mesures sur les fréquences Fa et Fb après application des corrections ionosphériques fournies par le modèle d'erreur.

Cette solution permet d'éviter de réintroduire l'erreur ionosphérique moyenne dans les mesures mono-fréquence.

Les équations précédentes peuvent être exprimées en remplaçant le retard ionosphérique $B_{iono\ i\ x}$ par $B_{iono\ résidu\ i\ x}$.

On note $B_{iono\ résidu\ i\ x}$ le résidu de retard après application de la correction fournie par le modèle d'erreur.

On a l'équation suivante : $B_{iono\ résidu\ i\ x} = B_{iono\ i\ x} - B_{iono\ modèle\ i\ x}$.

On conserve toujours la relation : $F_a^2.B_{iono\ résidu\ i\ a} - F_b^2.B_{iono\ résidu\ i\ b} = 0$

Et par construction : $F_a^2.B_{iono\ modèle\ i\ a} - F_b^2.B_{iono\ modèle\ i\ b} = 0$

Un autre mode de réalisation permet de corriger les erreurs "système" en prenant en compte un modèle tout en corrigeant, selon un mode de réalisation de l'invention, le biais inter-fréquence dans les canaux HF.

En effet, les mesures satellites sont affectées d'erreurs « systèmes » indépendantes du récepteur, dues aux imprécisions sur les corrections d'horloge satellite et des éphémérides et aux retards atmosphériques lorsque le signal traverse la ionosphère et la troposphère.

L'invention permet de distinguer :

■ d'une part, les erreurs systèmes indépendantes de la fréquence telle que les erreurs d'horloge satellite, les erreurs d'éphémérides ou encore les erreurs liées à la traversée de la troposphère et ;
■ d'autre part, les erreurs ionosphériques dépendantes de la fréquence et facile à éliminer grâce aux mesures bi-fréquences.

Une partie des retards dus à la troposphère peut être éliminée grâce à un modèle d'erreur. On considère, dans la mise en oeuvre de l'invention, que les erreurs de mesure "système" comprend le résidu de l'erreur troposphérique après correction.
Les mesures mono-fréquences donnent les bruits de mesures suivants :

$$v_{ia} = v_{i\,système} + v_{i\,a\,récepteur}$$

$$v_{ib} = v_{i\,système} + v_{i\,b\,récepteur}$$

Les mesures bi-fréquences iono-free donnent les bruits de mesures suivants :

$$v_i = \alpha.v_{ia} + \beta.v_{ib} = v_{i\,système} + \alpha.v_{ia\,récepteur} + \beta.v_{ib\,récepteur}$$

Avec les notations suivantes :

$V_i$ système : Erreur de mesure due au système hors retard ionosphérique, tel que le biais d'horloge satellite, l'erreur d'éphémérides, ou le résidu de biais troposphérique après correction. Ces erreurs sont communes aux deux fréquences Fa et Fb.
$V_i$ x récepteur : Erreur de mesure due au récepteur, tel que le bruit thermique, sur la fréquence x avec x = a ou b.

On peut alors calculer la variance du bruit de mesure.
Sur les mesures mono-fréquences, on a les relations suivantes :

$$\sigma_{ia}^2 = var[\,v_{ia}\,] = var[v_{système}] + var[v_{récepteur\,i\,a}] = \sigma_{système}^2 + \sigma_{récepteur\,i\,a}^2$$

$$\sigma_{ib}^2 = var[\,v_{ib}\,] = var[v_{système}] + var[v_{récepteur\,i\,b}] = \sigma_{système}^2 + \sigma_{récepteur\,i\,b}^2$$

$$\sigma_{système}^2 = var[v_{système}] = (6\,m)^2 \text{ dans le cas du GPS}$$

$$\sigma_{récepteur\,i\,x}^2 = var[v_{récepteur\,i\,x}] = \lambda_{code\,x}^2 \frac{\delta_b}{2} \frac{B_{DLL}}{2C/N_{0\,x\,i}} \left(1 + \frac{B_{FI}}{C/N_{0\,x\,i}}\right)$$

$\lambda_{code\,x}$ : Longueur d'un élément du code d'étalement sur la fréquence x avec x =a ou b;
$\delta_x$ : Espacement entre les corrélateurs avance et retard dans la boucle de code ;
$B_{DLL}$ : Bande passante mono-latérale de la boucle de code, l'acronyme DLL signifiant dans la terminologie anglo-saxonne : "Delay Lock loop" ;
$B_{FI}$ : Bande de pré-détection dans la boucle de code ;
$C/N_{0\,x\,i}$ : Rapport signal sur bruit estimé sur la fréquence x, avec x = a ou b, pour le satellite i

On obtient la variance du bruit de mesures sur les signaux bi-fréquences "iono-free" par la relation suivante :

$$\sigma_i^2 = var[\ v_i\ ] = \sigma_{système}^2 + \alpha^2.\ \sigma_{récepteur\ i\ a}^2 + \beta^2.\ \sigma_{récepteur\ i\ b}^2$$

Si l'on prend en compte la correction sur les mesures bi-fréquences iono-free, c'est-à-dire les mesures compensées par la correction, deux cas de figures se présentent.

Dans un premier cas, si il n'y a pas de mesures mono-fréquences, la correction $\beta.\Delta B$ estimé étant la même sur toutes les mesures bi-fréquences on peut considérer que l'erreur d'estimation de $\Delta B$ n'a pas d'effet sur la résolution de la position et donc peut être ignorée,

Dans un second cas, si on introduit des mesures mono-fréquences dans le calcul, il faut considérer la variance sur les biais de mesure bi-fréquences introduits par les mesures mono-fréquences.

On considère le biais sur les mesures bi-fréquences et on obtient les relations suivantes :

$$pd_{1a\ mes}' = pd_1 + \Delta t' + B_{iono\ résidu\ 1\ a} - B_{iono\ résidu\ moy} + \beta.v_{moy} + v_{1a}$$
$$pd_{2b\ mes}' = pd_2 + \Delta t' + B_{iono\ résidu\ 2\ a} + (\alpha/\beta).B_{iono\ résidu\ moy} - \alpha.v_{moy} + v_{2b}$$
$$pd_{3\ mes}' = pd_3 + \Delta t' \quad\quad + v_3$$
$$\dots$$
$$pd_{N\ me}' = pd_N + \Delta t' \quad\quad + v_N$$

Avec $\Delta t' = \Delta t_h + B_a + B_{iono\ résidu\ moy} - \beta.V_{moy}$

On s'intéresse, dans ce cas, à la variance des erreurs non communes aux satellites, c'est à dire hors $\Delta t'$.

On peut alors écrire les relations suivantes :

$$var[pd_{1a\ mes}' - \Delta t'] = var[B_{iono\ résidu\ i\ a}] + var[B_{iono\ résidu\ moy}] + \beta^2.var[v_{moy}] + var[v_{1a}]$$

$$var[pd_{2bmes}' - \Delta t'] = var[B_{iono\ résidu\ 2b}] + (\alpha/\beta)^2.var[B_{iono-résidu-moy}] + \alpha^2.var[v_{moy}] + var[v_{2b}]$$

$$var[pd_{3mes}' - \Delta t'] = var[v_3]$$

$$var[pd_{Nmes}' - \Delta t'] = var[v_N]$$

$$var[\ B_{iono\ résidu\ i\ a}] = \sigma_{iono\ a}^2 / 4$$

$$var[\ B_{iono\ résidu\ i\ b}] = (\alpha/\beta)^2.\sigma_{iono\ a}^2 / 4$$

On peut noter que :

$var[B_{iono\ résidu\ moy}]$ : est négligeable car on a un grand nombre de mesure et on suppose le modèle de correction ionosphérique non biaisé.

$var[v_{moy}]$ est négligeable pour les mêmes raisons.

Concernant *la valeur due* $var[B_{iono\ résidu\ i\ a}]$, le modèle corrige 50% de l'erreur en écart-type.

On obtient finalement :

$$\sigma_{ia}'^2 = var[pd_{1a\ mes}' - \Delta t'] = \sigma_{iono\ a}^2 \cdot (0,50)^2 + \sigma_{système}^2 + \sigma_{récepteur\ i\ a}^2$$

$$\sigma_{ib}'^2 = var[pd_{2b\ mes}' - \Delta t'] = (\alpha/\beta)^2 \cdot \sigma_{iono\ b}^2 \cdot (0,50)^2 + \sigma_{système}^2 + \sigma_{récepteur\ i\ b}^2$$

$$\sigma_i'^2 = var[pd_{3\ mes}' - \Delta t'] = \sigma_{système}^2 + \alpha^2 \cdot \sigma_{récepteur\ i\ a}^2 + \beta^2 \cdot \sigma_{récepteur\ i\ b}^2$$

L'invention permet de résoudre la solution des équations précédentes par une pondération aux moindres-carrés.

Afin de minimiser l'erreur sur la position résolue, on tient compte de la dégradation de la précision des mesures mono-fréquence par rapport aux mesures bi-fréquences dans la pondération des mesures de pseudo-distances.

On a la matrice :

$$W = \begin{bmatrix} 1/\sigma_{1a}'^2 & 0 & .. & .. & 0 \\ 0 & 1/\sigma_{2b}'^2 & 0 & . & : \\ : & 0 & 1/\sigma_3^2 & 0 & : \\ : & . & 0 & . & 0 \\ 0 & .. & .. & 0 & 1/\sigma_N^2 \end{bmatrix}$$

Un avantage de l'invention est que ce principe peut être appliqué au mélange de mesures satellites venant de différentes constellations, GPS et Galileo notamment.

Les mesures Galileo sur L1 sont entachées, par rapport aux mesures GPS sur L1, d'un biais égal à l'écart entre le temps système Galileo et le temps système GPS augmenté de la différence de temps de propagation entre un signal Galileo et un signal GPS dans la bande L1 du récepteur.

On note l'acronyme suivant couramment utilisé GGTO : Galileo to GPS Time Offset.

Les signaux GPS et Galileo n'ont pas le même spectre, donc possèdent des temps de propagation différents.

Les mesures Galileo sur E5, également noté E5b, sont entachées, par rapport aux mesures GPS sur L1, d'un biais égal à l'écart de temps système augmenté de la différence de temps de propagation entre un signal Galileo dans la bande E5b du récepteur et un signal GPS dans la bande L1.

On utilise le même principe pour identifier ces deux biais. Dans ce cas il faut passer par un calcul de résolution de la position pour identifier les biais :

$$\begin{bmatrix} pd_{i\ L1\ GPS\ mes} - pd_{i\ calculée} \\ pd_{j\ L5\ GPS\ mes} - pd_{j\ calculée} \\ pd_{k\ L1\ Gal\ mes} - pd_{k\ calculée} \\ pd_{l\ E5\ Gal\ mes} - pd_{l\ calculée} \end{bmatrix} = \begin{bmatrix} \cos\theta_{ix} & \cos\theta_{iy} & \cos\theta_{iz} & 1 & 0 & 0 & 0 \\ \cos\theta_{jx} & \cos\theta_{jy} & \cos\theta_{jz} & 1 & 1 & 0 & 0 \\ \cos\theta_{kx} & \cos\theta_{ky} & \cos\theta_{kz} & 1 & 0 & 1 & 0 \\ \cos\theta_{lx} & \cos\theta_{ly} & \cos\theta_{lz} & 1 & 0 & 0 & 1 \end{bmatrix} \begin{bmatrix} x - x_0 \\ y - y_0 \\ z - z_0 \\ \Delta t \\ \Delta B_1 \\ \Delta B_2 \\ \Delta B_3 \end{bmatrix} + \begin{bmatrix} v_i \\ v_j \\ v_k \\ v_l \end{bmatrix}$$

$$
\begin{bmatrix} \Delta pd_{i\,L1\,GPS\,mes} \\ \Delta pd_{j\,L5\,GPS\,mes} \\ \Delta pd_{k\,L1\,Gal\,mes} \\ \Delta pd_{l\,E5\,Gal\,mes} \end{bmatrix} = H \begin{bmatrix} \Delta x \\ \Delta y \\ \Delta z \\ \Delta t \\ \Delta B_1 \\ \Delta B_2 \\ \Delta B_3 \end{bmatrix} + \begin{bmatrix} v_i \\ v_j \\ v_k \\ v_l \end{bmatrix}
$$

$\Delta B_1$ : Biais entre un signal GPS sur L5 et un signal GPS sur L1
$\Delta B_2$ : Biais entre un signal Galileo sur L1 et un signal GPS sur L1
$\Delta B_3$ : Biais entre un signal Galileo sur E5 et un signal GPS sur L1

On résout par les moindres-carrés :

$$
\begin{bmatrix} \Delta x_{estimé\ provisoire} \\ \Delta y_{estimé\ provisoire} \\ \Delta z_{estimé\ provisoire} \\ \Delta t_{estimé\ provisoire} \\ \Delta B_{1\,estimé}(n) \\ \Delta B_{2\,estimé}(n) \\ \Delta B_{3\,estimé}(n) \end{bmatrix} = H^* \begin{bmatrix} \Delta pd_{i\,L1\,GPS\,mes}(n) \\ \Delta pd_{j\,L5\,GPS\,mes}(n) \\ \Delta pd_{k\,L1\,Gal\,mes}(n) \\ \Delta pd_{l\,E5\,Gal\,mes}(n) \end{bmatrix} \quad \text{avec } H^* = (H^T W^T W H)^{-1} H^T W^T
$$

et

$$
W = \begin{bmatrix} 1/\sigma^2_{i\,L1\,GPS} & 0 & .. & 0 \\ 0 & 1/\sigma^2_{j\,L5\,GPS} & 0 & : \\ : & 0 & 1/\sigma^2_{k\,L1\,Gal} & 0 \\ 0 & .. & 0 & 1/\sigma^2_{l\,E5\,Gal} \end{bmatrix}
$$

Ensuite on filtre les biais estimés :

$$
\Delta B_{q\,estimé\ filtrée}(n) \overset{def}{=} (1 - \frac{1}{\tau})\Delta B_{q\,estimé\ filtrée}(n-1) + \frac{1}{\tau}\Delta B_{q\,estimé}(n) \qquad pour\ q = 1, 2, 3
$$

On peut aussi faire une simple moyenne :

$$
\Delta B_{q\,estimé\ filtrée}(n) \overset{def}{=} \frac{1}{N} \sum_{k=n-N+1}^{k=n} \Delta B_{q\,estimé}(k) \quad , \text{pour q = 1, 2, 3}
$$

Enfin on corrige les mesures GPS L5 et Galileo L1 & E5 et on résout la position GPS / Galileo.

La correction du biais inter-fréquence peut-être compensée avant ou après la combinaison iono-free.

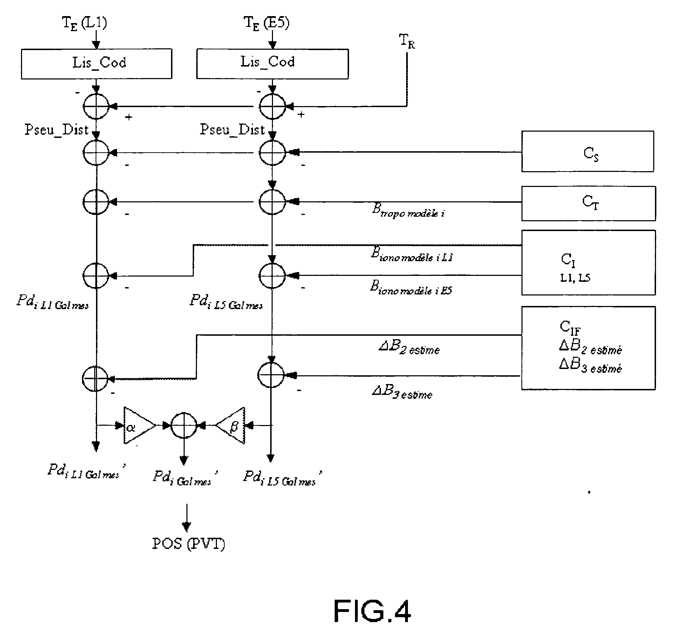

La figure 4 représente l'ordre des corrections sur les signaux reçus par le récepteur, notamment la correction du biais inter-fréquence qui peut intervenir selon une variante de réalisation avant la combinaison iono-free.

La figure 4 représente l'ordre des corrections dans un récepteur GNSS lorsqu'un premier signal reçu provient d'un satellite d'une première constellation de type GPS et qu'un second signal reçu provient d'un satellite d'une seconde constellation de type Galileo par exemple.

Le récepteur opère une étape de lissage des mesures des temps d'émissions, notée Lis_Cod, grâce aux mesures de phase de porteuses sur les fréquences L1 et E5. Les temps d'émission $T_E(L1)$ et $T_E(E5)$ mesurés sur les fréquences L1 et E5 sont soustraits au temps de réception mesuré $T_R$ pour produire des pseudo-distances mesurées respectivement sur les fréquences L1 et E5.

Le récepteur GNSS opère les corrections Cs, $C_T$, $C_I$, comme précédemment détaillées dans la figure 3. Un biais de compensation $B_{iono\ modèle\ i\ x}$ dans le traitement des signaux, notamment de chacune des porteuses E5 et L1, est introduit pour compenser les retards ionosphériques dans chacune des voies. On obtient à cette étape de correction les pseudo-mesures $Pd_{i\ L1Gal\ mes}$ et $Pd_{i\ L5\ Gal\ mes}$ respectivement sur chacune des voies.

Enfin, l'invention propose d'introduire un biais de compensation des mesures inter-fréquence $\Delta B_{2\ estimé}$ et $\Delta B_{3\ estimé}$ de manière à corriger le biais inter-canal HF $\Delta B_{HF}$ dans chacune des voies du récepteur GNSS.

Les corrections $C_{IF}$ permettent d'introduire cette dernière compensation dans les mesures des pseudo-distances. Les corrections, par l'introduction d'un biais de compensation des mesures inter-fréquence, peuvent avoir lieu, selon les modes de réalisation :

■ soit sur les mesures des pseudo-distances bi-fréquences ;
■ soit sur les mesures des pseudo-distances iono-free.

On obtient après corrections les grandeurs relatives à une pseudo-distance $pd_{i\ L1\ Gal\ mes}$' et $pd_{i\ L5\ Gal\ mes}$'. Ces deux pseudo-distances compensées et combinées permettront d'obtenir alors la pseudo-distance iono free $pd_{i\ Gal\ mes}$'. La résolution de la position du récepteur est obtenue ensuite grâce à la combinaison d'au moins quatre pseudo-distances mesurées.

La figure 4 représente le cas de figure où les corrections sont faites en amont du calcul des pseudo-distances iono-free entre les satellites et le récepteur GNSS.

La position POS(PVT) est alors déterminée après toutes les prises en compte de corrections de compensation dans le récepteur à partir du calcul des pseudo-distances iono-free.

**Revendications**

1. Procédé de détermination de la position d'un récepteur GNSS mobile à partir d'au moins quatre satellites dont au moins un premier satellite ($S_1$'), dit satellite mono-fréquence, émet un premier signal sur une première fréquence ($F_a$), et dont au moins un autre satellite ($S_2$, $S_3$, $S_4$), dit bi-fréquence, émet un second et un troisième signaux respectivement sur la première fréquence ($F_a$) et sur une seconde fréquence ($F_b$), le récepteur comportant des moyens de réception d'au moins deux fréquences ($F_a$, $F_b$), la détermination de la position du récepteur comprenant le calcul d'au moins quatre pseudo-distances correspondant aux distances entre chaque satellite et le récepteur, **caractérisé en ce que** le calcul de la position du récepteur comporte une étape de calcul d'un biais inter-fréquence estimé moyen noté $\Delta B_{estimé}$ des signaux bi-fréquences reçus dans les canaux HF du récepteur, le biais inter-fréquence estimé moyen $\Delta B_{estimé}$ entre les signaux bi-fréquences reçus par le récepteur étant égal à :

$$\Delta B_{estimé} \overset{def}{=} \frac{1}{(N-1)}\sum_{i=2}^{N}(pd_{ib\ mes} - pd_{ia\ mes}),$$

où $i \in [2, N]$ sont des satellites bi-fréquences et $pd_{ia\text{-}mes}$ la pseudo-distance entre le satellite i et le récepteur mesurée sur la première fréquence ($F_a$) et $pd_{ib\text{-}mes}$ la pseudo-distance entre le satellite i et le récepteur mesurée sur la seconde fréquence ($F_b$), le procédé selon l'invention comprenant en outre une étape de compensation du biais inter-fréquence sur un premier ensemble de pseudo-distance bi-fréquence, comprenant, la définition, pour chaque satellite bi-fréquence, d'une pseudo-distance corrigée ($pd_{mes\ i}$') qui est égale à la valeur d'une pseudo-distance iono-free ($pd_{mes\ i}$), dans laquelle le biais dû à la traversée de l'ionosphère de signaux bi-fréquence est corrigé, retranchée d'un facteur correctif égal au produit du biais inter-fréquence estimé moyen ($\Delta B_{estimé}$) et d'une première constante ($\beta$), la première constante ($\beta$) étant égale au rapport entre la seconde fréquence au carré et la différence des carrés de la première et la seconde fréquence ($\beta = F_b^2 / (F_b^2 - F_a^2)$).

**2.** Procédé de détermination de la position d'un récepteur mobile selon la revendication 1, **caractérisé en ce que** le biais inter-fréquence estimé moyen entre les signaux bi-fréquences reçus par le récepteur est égale à :

$$\Delta B_{estimé\;filtrée}(n) \overset{def}{=} (1 - \frac{1}{\tau})\Delta B_{estimé\;filtrée}(n-1) + \frac{1}{\tau}\Delta B_{estimé}(n),$$

Ou $\tau$ est une constante de temps et où n est un indice d'échantillonnage avec une période inférieure à la corrélation du retard ionosphérique.

**3.** Procédé de détermination de la position d'un récepteur mobile selon l'une quelconque des revendications 1 à 2, **caractérisé en ce que** l'étape de compensation du biais inter-fréquence sur un premier ensemble de pseudo-distances comprend le calcul de pseudo-distances iono-free, chaque pseudo-distance iono-free étant égales, pour chaque satellite bi-fréquence, à : $pd_{i-mes} = (F_a{}^2 \cdot pd_{ia-mes} - F_b{}^2 \cdot pd_{i\cdot\;mes})/ (F_a{}^2 - F_b{}^2)$.

**4.** Procédé de détermination de la position d'un récepteur mobile selon l'une quelconque des revendications précédentes, à partir d'au moins quatre satellites dont au moins un second satellite mono-fréquence ($S_2$') émet un signal sur la seconde fréquence ($F_b$), **caractérisé en ce que** l'étape de compensation du biais inter-fréquence comprend en outre
une seconde définition, pour le second satellite mono-fréquence ($S_2$'), d'une pseudo-distance corrigée ($pd_{2b-mes}$') qui est égal à la valeur de la pseudo-distance mesurée ($pd_{2b-mes}$) retranchée de la valeur du biais estimé inter-fréquence ($\Delta B_{estimé}$).

**5.** Procédé de détermination de la position d'un récepteur mobile selon l'une quelconque des revendications précédentes, à partir d'au moins quatre satellites dont au moins un second satellite mono-fréquence ($S_2$') émet un signal sur la seconde fréquence ($F_b$), **caractérisé en ce que** l'étape de compensation du biais inter-fréquence comprend :

■ une troisième définition, pour le premier satellite mono-fréquence ($S_1$'), d'une pseudo-distance corrigée ($pd_{1a-mes}$'') qui est égale à la valeur de la pseudo-distance mesurée ($pd_{1a-mes}$) sur la fréquence $F_a$ à laquelle est ajoutée le facteur correctif ($\beta \cdot \Delta B_{estimé}$) et ;
■ une quatrième définition, pour le second satellite mono-fréquence ($S_2$'), d'une pseudo-distance corrigée ($pd_{2b-mes}$'') qui est égale à la valeur de la pseudo-distance mesurée ($pd_{2b-mes}$) sur la fréquence $F_b$:

■ à laquelle est ajoutée le facteur correctif ($\beta \cdot \Delta B_{estimé}$) et ;
■ à laquelle est retranchée la valeur du biais inter-fréquence estimé moyen ($\Delta B_{estimé}$).

**Claims**

**1.** A method for determining the position of a mobile GNSS receiver from at least four satellites of which at least one first satellite ($S_1$'), referred to as a mono-frequency satellite, emits a first signal on a first frequency ($F_a$), and of which at least one other satellite ($S_2$, $S_3$, $S_4$), referred to as a bi-frequency satellite, emits a second and a third signal, respectively, on the first frequency ($F_a$) and on a second frequency ($F_b$), the receiver comprising means for receiving at least two frequencies ($F_a$, $F_b$), said determining of the position of the receiver comprising the calculation of at least four pseudo-distances that correspond to the distances between each satellite and the receiver, **characterised in that** the calculation of the position of the receiver comprises a step of calculating a mean estimated inter-frequency bias, designated $\Delta B_{estimé}$, of the bi-frequency signals received in the HF channels of the receiver, the mean estimated inter-frequency bias $\Delta B_{estimé}$ between the bi-frequency signals received by the receiver being equal to :

$$\Delta B_{estimé} \overset{def}{=} \frac{1}{(N-1)}\sum_{i=2}^{N}(pd_{ib\;mes} - pd_{ia\;mes}),$$

wherein $i \in [2, N]$ are bi-frequency satellites and $pd_{ia-mes}$ is the pseudo-distance between the satellite i and the receiver measured on the first frequency ($F_a$) and $pd_{ib-mes}$ is the pseudo-distance between the satellite i and the receiver measured on the second frequency ($F_b$), the method according to the invention further comprising a step of compensating the inter-frequency bias on a first set of bi-frequency pseudo-distances comprising the definition, for each bi-frequency satellite, of a corrected pseudo-distance ($pd_{mes\ i'}$) that is equal to the value of an iono-free pseudo-distance ($pd_{mes\ i}$), wherein the bias caused by bi-frequency signals passing through the ionosphere is corrected, reduced by a correction factor that is equal to the product of the mean estimated inter-frequency bias $\Delta B_{estimé}$ and a first constant ($\beta$), said first constant ($\beta$) being equal to the ratio between the square of the second frequency and the difference of the squares of the first and second frequencies ($\beta = F_b{}^2 / (F_b{}^2 - F_a{}^2)$).

2. The method for determining the position of a mobile receiver according to claim 1, **characterised in that** the mean estimated inter-frequency bias between the bi-frequency signals received by the receiver is equal to:

$$\Delta B_{estimé\ filtrée}(n) \overset{def}{=} (1 - \frac{1}{\tau})\Delta B_{estimé\ filtrée}(n-1) + \frac{1}{\tau}\Delta B_{estimé}(n),$$

wherein $\tau$ is a time constant and wherein n is a sampling index with a period that is less than the correlation of the ionospheric delay.

3. The method for determining the position of a mobile receiver according to any one of claims 1 to 2, **characterised in that** the step of compensating the inter-frequency bias on a first set of pseudo-distances comprises the calculation of iono-free pseudo-distances, each iono-free pseudo-distance being equal, for each bi-frequency satellite, to:
$pd_{i\text{-}mes} = (F_a2 \cdot pd_{ia\text{-}mes} - F_b{}^2 \cdot Pd_{i\text{-}mes}) / (F_a{}^2 - F_b{}^2)$.

4. The method for determining the position of a mobile receiver according to any one of the preceding claims, from at least four satellites of which at least one second mono-frequency satellite ($S_2$') emits a signal on the second frequency ($F_b$), **characterised in that** the step of compensating the inter-frequency bias further comprises a second definition, for the second mono-frequency satellite ($S_2$'), of a corrected pseudo-distance ($pd_{2b\text{-}mes}$') that is equal to the value of the measured pseudo-distance ($pd_{2b\text{-}mes}$) reduced by the value of the estimated inter-frequency bias ($\Delta B_{estimé}$).

5. The method for determining the position of a mobile receiver according to any one of the preceding claims, from at least four satellites of which at least one second mono-frequency satellite ($S_2$') emits a signal on the second frequency ($F_b$), **characterised in that** the step of compensating the inter-frequency bias comprises:

   ■ a third definition, for the first mono-frequency satellite ($S_1$'), of a corrected pseudo-distance ($pd_{1a\text{-}mes}$") that is equal to the value of the measured pseudo-distance ($pd_{1a\text{-}mes}$) on the frequency $F_a$, to which the correction factor ($\beta \cdot \Delta B_{estimé}$) is added; and
   ■ a fourth definition, for the second mono-frequency satellite ($S_2$'), of a corrected pseudo-distance ($pd_{2b\text{-}mes}$") that is equal to the value of the measured pseudo-distance ($pd_{2b\text{-}mes}$) on the frequency $F_b$:

      ■ to which the correction factor ($\beta \cdot \Delta B_{estimé}$) is added; and
      ■ that is reduced by the value of the mean estimated inter-frequency bias ($\Delta B_{estimé}$).

**Patentansprüche**

1. Verfahren zum Ermitteln der Position eines GNSS-Mobilfunkempfängers von wenigstens vier Satelliten, von denen wenigstens ein erster Satellit ($S_1$'), Monofrequenzsatellit genannt, ein erstes Signal auf einer ersten Frequenz ($F_a$) aussendet, und von denen wenigstens ein anderer Satellit ($S_2$, $S_3$, $S_4$), Bifrequenzsatellit genannt, jeweils ein zweites und ein drittes Signal auf der ersten Frequenz ($F_a$) und auf einer zweiten Frequenz ($F_b$) aussendet, wobei der Empfänger Mittel zum Empfangen von wenigstens zwei Frequenzen ($F_a$, $F_b$) umfasst, wobei das Ermitteln der Position des Empfängers das Berechnen von wenigstens vier Pseudodistanzen beinhaltet, die den Distanzen zwischen jedem Satelliten und dem Empfänger entsprechen, **dadurch gekennzeichnet, dass** das Berechnen der Position des Empfängers einen Schritt des Berechnens eines mittleren geschätzten Zwischenfrequenzbias, $\Delta B_{estimé}$ genannt, der in den HF-Kanälen des Empfängers empfangenen Bifrequenzsignale, wobei das mittlere geschätzte Zwischenfrequenzbias $\Delta B_{estimé}$ zwischen den vom Empfänger empfangenen Bifrequenzsignalen wie folgt ist:

$$\Delta B_{estimé} \overset{def}{=} \frac{1}{(N-1)} \sum_{i=2}^{N} (pd_{ib\,mes} - pd_{ia\,mes}),$$

wobei i ∈ [2, N] Bifrequenzsatelliten sind und $pd_{ia-mes}$ die Pseudodistanz zwischen dem Satelliten i und dem Empfänger ist, gemessen auf der ersten Frequenz ($F_a$), und $pd_{ib-mes}$ die Pseudodistanz zwischen dem Satelliten i und dem Empfänger ist, gemessen auf der zweiten Frequenz ($F_b$), wobei das erfindungsgemäße Verfahren ferner einen Schritt des Kompensierens des Zwischenfrequenzbias auf einem ersten Bifrequenz-Pseudodistanzsatz beinhaltet, der für jeden Bifrequenzsatelliten die Definition einer korrigierten Pseudodistanz ($pd_{mes\,i}'$) umfasst, die gleich dem Wert einer iono-freien Pseudodistanz ($pd_{mes\,i}$) ist, wobei das von durch die Ionosphäre passierenden Bifrequenzsignalen verursachte Bias korrigiert wird, reduziert um einen Korrekturfaktor, der gleich dem Produkt aus dem mittleren geschätzten Zwischenfrequenzbias $\Delta B_{estimé}$ und einer ersten Konstante (β) ist, wobei die erste Konstante (β) gleich dem Verhältnis zwischen dem Quadrat der zweiten Frequenz und der Differenz der Quadrate der ersten und der zweiten Frequenz (β = $F_b^2$ / ($F_b^2 - F_a^2$) ist.

2. Verfahren zum Ermitteln der Position eines Mobilfunkempfängers nach Anspruch 1, **dadurch gekennzeichnet, dass** das mittlere geschätzte Zwischenfrequenzbias zwischen den von dem Empfänger empfangenen Zweifrequenzsignalen wie folgt ist:

$$\Delta B_{estimé\,filtré}(n) \overset{def}{=} (1 - \frac{1}{\tau})\Delta B_{estimé\,filtré}(n-1) + \frac{1}{\tau}\Delta B_{estimé}(n),$$

wobei τ eine Zeitkonstante ist und wobei n ein Sampling-Index mit einer Periode ist, die kleiner ist als die Korrelation der ionosphärischen Verzögerung.

3. Verfahren zum Ermitteln der Position eines Mobilfunkempfängers nach einem der Ansprüche 1 bis 2, **dadurch gekennzeichnet, dass** der Schritt des Kompensierens des Zwischenfrequenzbias auf einem ersten Pseudodistanzsatz das Berechnen von iono-freien Pseudodistanzen beinhaltet, wobei für jeden Bifrequenzsatelliten jede iono-freie Pseudodistanz wie folgt lautet: $pd_{i-mes} = (F_a^2 \cdot pd_{ia-mes} - F_b^2 \cdot pd_{i-mes}) / (F_a^2 - F_b^2)$.

4. Verfahren zum Ermitteln der Position eines Mobilfunkempfängers nach einem der vorherigen Ansprüche von wenigstens vier Satelliten, von denen wenigstens ein zweiter Monofrequenzsatellit ($S_2'$) ein Signal auf der zweiten Frequenz ($F_b$) aussendet, **dadurch gekennzeichnet, dass** der Schritt des Kompensierens des Zwischenfrequenzbias ferner, für den zweiten Monofrequenzsatelliten ($S_2'$), eine zweite Definition einer korrigierten Pseudodistanz ($pd_{2b-mes}'$) umfasst, die gleich dem Wert der gemessenen Pseudodistanz ($pd_{2b-mes}$) reduziert um den Wert des geschätzten Zwischenfrequenzbias ($\Delta B_{estimé}$) ist.

5. Verfahren zum Ermitteln der Position eines Mobilfunkempfängers nach einem der vorherigen Ansprüche, von wenigstens vier Satelliten, von denen wenigstens ein zweiter Monofrequenzsatellit ($S_2'$) ein Signal auf der zweiten Frequenz ($F_b$) aussendet, **dadurch gekennzeichnet, dass** der Schritt des Kompensierens des Zwischenfrequenzbias Folgendes beinhaltet:

   ■ eine dritte Definition, für den ersten Monofrequenzsatelliten ($S_1'$), einer korrigierten Pseudodistanz ($pd_{1a-mes}''$), die gleich dem Wert der gemessenen Pseudodistanz ($pd_{1a-mes}$) auf der Frequenz $F_a$ ist, zu dem der Korrekturfaktor (β· $\Delta B_{estimé}$) addiert wurde; und
   ■ eine vierte Definition, für den zweiten Monofrequenzsatelliten ($S_2'$), einer korrigierten Pseudodistanz ($pd_{2b-mes}''$), die gleich dem Wert der gemessenen Pseudodistanz ($pd_{2b-mes}$) auf der Frequenz $F_b$ ist:

      ■ zu der der Korrekturfaktor (β $\Delta B_{estimé}$) addiert wird; und
      ■ auf den der Wert des mittleren geschätzten Zwischenfrequenzbias ($\Delta B_{estimé}$) reduziert wird.

FIG.1

FIG.2

FIG.3

FIG.4